# EUROPEAN PATENT APPLICATION

(11) **EP 2 573 320 A2**
(43) Date of publication of application: **27.03.2013**
(21) Application number: 12184391.6
(22) Date of filing: 14.09.2012
(51) Int. Cl.: F01D 5/14, F01D 5/18

(54) **Components with cooling channels and methods of manufacture**

(30) Priority: 23.09.2011 US 201113242179
(71) Applicant: General Electric Company, Schenectady, NY 12345 (US)
(72) Inventor: Bunker, Ronald Scott, Niskayuna, NY New York 12309 (US); Weaver, Scott Andrew, Niskayuna, NY New York 12309 (US); Lipkin, Don Mark, Niskayuna, NY New York 12309 (US)
(74) Representative: Cleary, Fidelma

(57) **Abstract**

A manufacturing method is provided. The manufacturing method includes forming one or more grooves (132) in a component that comprises a substrate (110) with an outer surface (112). The substrate has at least one interior space. Each groove extends at least partially along the substrate and has a base and a top. The manufacturing method further includes processing an intermediate surface (112) of the component to plastically deform the surface adjacent at least one edge of a respective groove (132), such that the distance across the top of the groove is reduced. Another manufacturing method is provided and includes processing an intermediate surface of the component to facet the intermediate surface in the vicinity of the groove.

## Description

### BACKGROUND

The invention relates generally to gas turbine engines, and, more specifically, to micro-channel cooling therein.

In a gas turbine engine, air is pressurized in a compressor and mixed with fuel in a combustor for generating hot combustion gases. Energy is extracted from the gases in a high pressure turbine (HPT), which powers the compressor, and in a low pressure turbine (LPT), which powers a fan in a turbofan aircraft engine application, or powers an external shaft for marine and industrial applications.

Engine efficiency increases with temperature of combustion gases. However, the combustion gases heat the various components along their flowpath, which in turn requires cooling thereof to achieve a long engine lifetime. Typically, the hot gas path components are cooled by bleeding air from the compressor. This cooling process reduces engine efficiency, as the bled air is not used in the combustion process.

Gas turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined, and suitably cooled.

In all of these exemplary gas turbine engine components, thin walls of high strength superalloy metals are typically used to reduce component weight and minimize the need for cooling thereof. Various cooling circuits and features are tailored for these individual components in their corresponding environments in the engine. For example, a series of internal cooling passages, or serpentines, may be formed in a hot gas path component. A cooling fluid may be provided to the serpentines from a plenum, and the cooling fluid may flow through the passages, cooling the hot gas path component substrate and any associated coatings. However, this cooling strategy typically results in comparatively low heat transfer rates and non-uniform component temperature profiles.

Micro-channel cooling has the potential to significantly reduce cooling requirements by placing the cooling as close as possible to the heated region, thus reducing the temperature difference between the hot side and cold side of the main load bearing substrate material for a given heat transfer rate. For certain applications, it is desirable to form channels with narrow openings (relative to the hydraulic diameter of the channel), so that the coating will more easily bridge the channel. For example, it has recently been proposed to machine micro-channels using an abrasive liquid jet. However, it may be challenging to form a sufficiently narrow channel top (restricted opening) in some instances because when the size of the liquid jet nozzle orifice is below about 10 mils (0.0254 mm), the abrasive particles may clog the nozzle, possibly leading to loss of dimensional tolerances, machining flaws, or loss of machine operability.

It would therefore be desirable to form channels with reduced openings (relative to the hydraulic diameter of the channel) to facilitate the application of bridging coatings across the channel openings.

### BRIEF DESCRIPTION

One aspect of the present invention resides in a manufacturing method that includes forming one or more grooves in a component that comprises a substrate with an outer surface. The substrate has at least one interior space. Each groove extends at least partially along the substrate and has a base and a top. The manufacturing method further includes processing an intermediate surface of the component to plastically deform the surface adjacent at least one edge of a respective groove, such that the distance across the top of the groove is reduced.

Another aspect of the present invention resides in a manufacturing method that includes forming one or more grooves in a component that comprises a substrate with an outer surface. The substrate has at least one interior space. Each groove extends at least partially along the substrate and has a base and a top. The manufacturing method further includes processing an intermediate surface of the component to plastically facet the intermediate surface in the vicinity of the groove.

Yet another aspect of the present invention resides in a component that includes a substrate comprising an outer surface and an inner surface, where the inner surface defines at least one hollow, interior space. The component defines one or more grooves. Each groove extends at least partially along the substrate and has a base and a top, and each groove narrows at the respective top thereof, such that each groove comprises a re-entrant shaped groove. An intermediate surface of the component is faceted in the vicinity of the respective groove. One or more access holes are formed through the base of a respective groove, to connect the groove in fluid communication with the respective hollow interior space. The component further includes at least one coating disposed over at least a portion of the surface of the substrate. The groove(s) and the coating together define one or more re-entrant shaped channels for cooling the component.

### DRAWINGS

Embodiments of the present invention will now be described, by way of example only, with reference to the accompanying drawings in which:
FIG. 1 is a schematic illustration of a gas turbine system;
FIG. 2 is a schematic cross-section of an example airfoil configuration with re-entrant shaped cooling channels, in accordance with aspects of the present invention;
FIG. 3 is a schematic cross-section of a portion of a cooling circuit with re-entrant shaped cooling channels;
FIG. 4 schematically depicts, in perspective view, three example micro-channels that extend partially along the surface of the substrate and channel coolant to respective film cooling holes;
FIG. 5 is a cross-sectional view of one of the example micro-channels of FIG. 4 and shows the micro-channel conveying coolant from an access hole to a film cooling hole;
FIG. 6 schematically depicts an example tooling path for forming a groove and a tapered, run-out region at the discharge end of the groove;
FIG. 7 schematically depicts an example re-entrant shaped cooling channel prior to a post-machining surface treatment;
FIG. 8 schematically depicts the re-entrant shaped cooling channel of FIG. 7 after a post-machining surface treatment that introduces irregularities in the treated surface;
FIG. 9 is a cross-sectional view of an example re-entrant shaped cooling channel with an opening size D₁ prior to a post-machining surface treatment;
FIG. 10 is a cross-sectional view of the re-entrant shaped cooling channel of FIG. 9 with the opening size reduced to D₂ after a post-machining surface treatment; and
FIG. 11 shows re-entrant shaped channels with permeable slots formed in a structural coating.

### DETAILED DESCRIPTION

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the term "combination" is inclusive of blends, mixtures, alloys, reaction products, and the like.

Moreover, in this specification, the suffix "(s)" is usually intended to include both the singular and the plural of the term that it modifies, thereby including one or more of that term (e.g., "the passage hole" may include one or more passage holes, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. Similarly, reference to "a particular configuration" means that a particular element (e.g., feature, structure, and/or characteristic) described in connection with the configuration is included in at least one configuration described herein, and may or may not be present in other configurations. In addition, it is to be understood that the described inventive features may be combined in any suitable manner in the various embodiments and configurations.

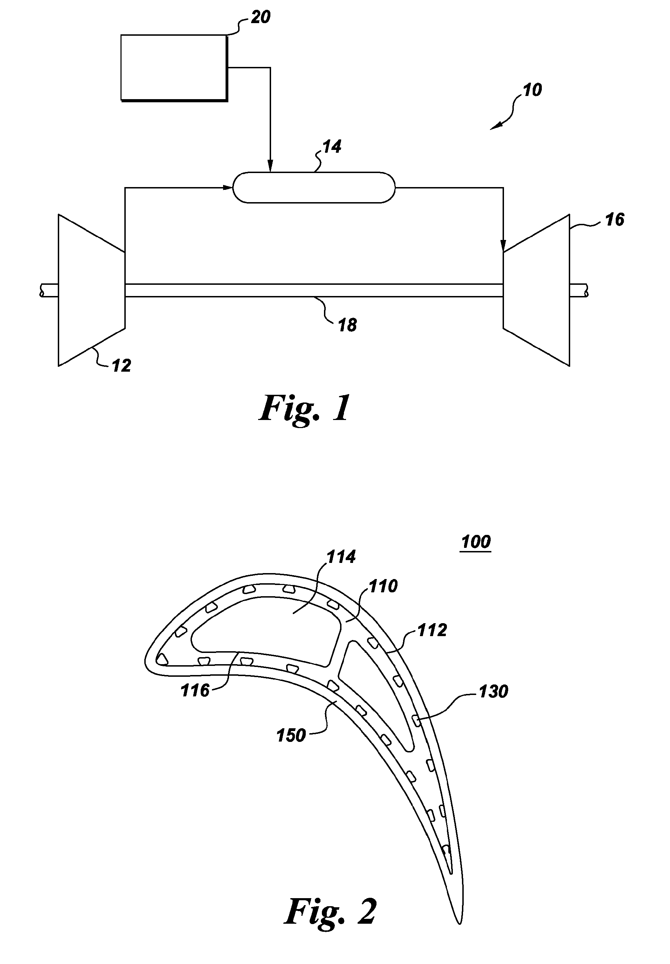

FIG. 1 is a schematic diagram of a gas turbine system 10. The system 10 may include one or more compressors 12, combustors 14, turbines 16, and fuel nozzles 20. The compressor 12 and turbine 16 may be coupled by one or more shaft 18. The shaft 18 may be a single shaft or multiple shaft segments coupled together to form shaft 18.

The gas turbine system 10 may include a number of hot gas path components 100. A hot gas path component is any component of the system 10 that is at least partially exposed to a high temperature flow of gas through the system 10. For example, bucket assemblies (also known as blades or blade assemblies), nozzle assemblies (also known as vanes or vane assemblies), shroud assemblies, transition pieces, retaining rings, and compressor exhaust components are all hot gas path components. However, it should be understood that the hot gas path component 100 of the present invention is not limited to the above examples, but may be any component that is at least partially exposed to a high temperature flow of gas. Further, it should be understood that the hot gas path component 100 of the present disclosure is not limited to components in gas turbine systems 10, but may be any piece of machinery or component thereof that may be exposed to high temperature flows.

When a hot gas path component 100 is exposed to a hot gas flow, the hot gas path component 100 is heated by the hot gas flow and may reach a temperature at which the hot gas path component 100 is substantially degraded or fails. Thus, in order to allow system 10 to operate with hot gas flow at a high temperature, increasing the efficiency, performance and/or life of the system 10, a cooling system for the hot gas path component 100 is required.

In general, the cooling system of the present disclosure includes a series of small channels, or micro-channels, formed in the surface of the hot gas path component 100. For industrial sized power generating turbine components, "small" or "micro" channel dimensions would encompass approximate depths and widths in the range of 0.25 mm to 1.5 mm, while for aviation sized turbine components channel dimensions would encompass approximate depths and widths in the range of 0.1 mm to 0.5 mm. The hot gas path component may be provided with a protective coating. A cooling fluid may be provided to the channels from a plenum, and the cooling fluid may flow through the channels, cooling the hot gas path component.

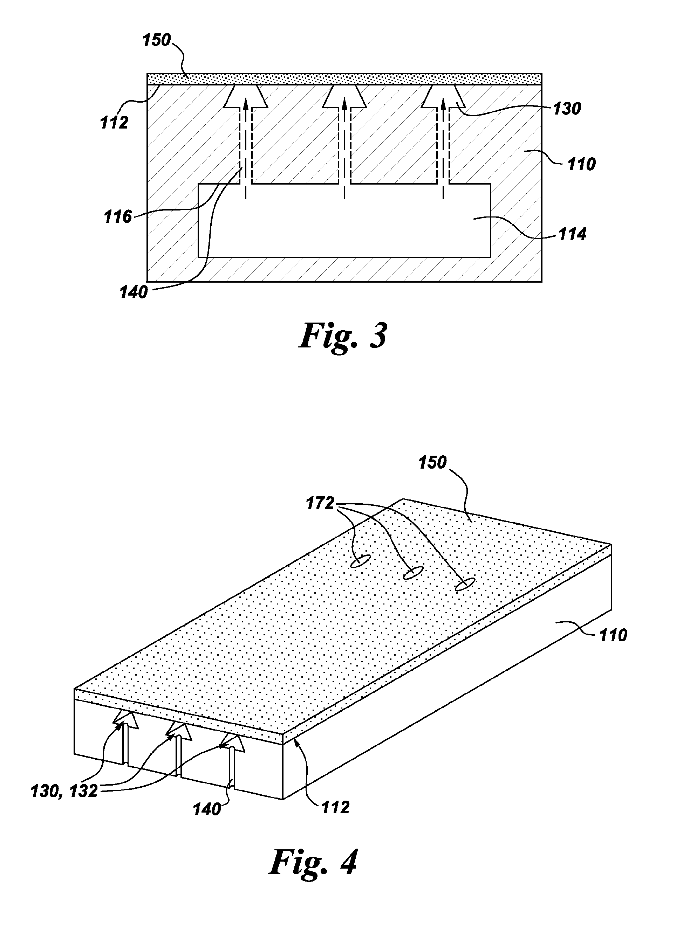

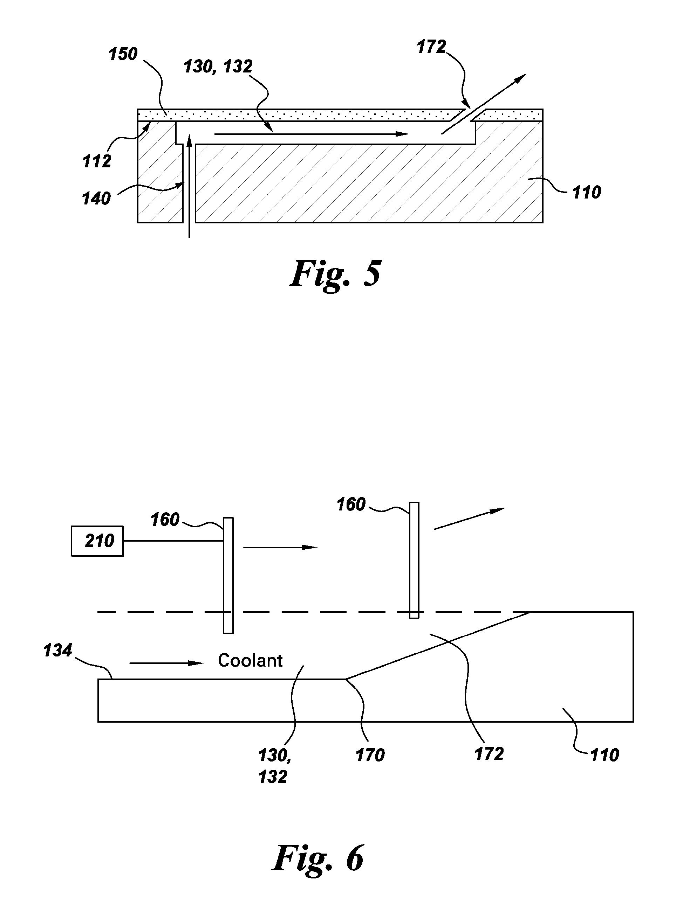

A manufacturing method is described with reference to FIGS. 2-11. As indicated for example in FIG. 2, the manufacturing method includes forming one or more grooves 132 in a component 100 that comprises a substrate 110 with an outer surface 112. As shown in FIG. 2, the substrate 110 has at least one interior space 114. As indicated, for example, in FIGS. 4 and 5, each groove 132 extends at least partially along the substrate 110 and has a base 134 and a top 146. For the configuration shown in FIG. 4, the each groove narrows at the respective top thereof, such that each groove 132 comprises a re-entrant shaped groove 132. Re-entrant-shaped grooves are discussed in commonly assigned, US Patent Application Ser. No. 12/943,624, R. Bunker et al., "Components with re-entrant shaped cooling channels and methods of manufacture," which is incorporated herein in its entirety. Although the grooves are shown as having straight walls, the grooves 132 can have any configuration, for example, they may be straight, curved, or have multiple curves.

The substrate 110 is typically cast prior to forming the groove(s) 132. As discussed in US Patent No. 5,626,462, Melvin R. Jackson et al.,"Double-wall airfoil," which is incorporated herein in its entirety, substrate 110 may be formed from any suitable material. Depending on the intended application for component 100, this could include Ni-base, Co-base and Fe-base superalloys. The Ni-base superalloys may be those containing both γ and γ' phases, particularly those Ni-base superalloys containing both γ and γ' phases wherein the γ' phase occupies at least 40% by volume of the superalloy. Such alloys are known to be advantageous because of a combination of desirable properties including high temperature strength and high temperature creep resistance. The substrate material may also comprise a NiAl intermetallic alloy, as these alloys are also known to possess a combination of superior properties including high temperature strength and high temperature creep resistance that are advantageous for use in turbine engine applications used for aircraft. In the case of Nb-base alloys, coated Nb-base alloys having superior oxidation resistance will be preferred, particularly those alloys comprising Nb-(27-40)Ti-(4.5-10.5)Al-(4.5-7.9)Cr-(1.5-5.5)Hf-(0-6)V, where the composition ranges are in atom per cent. The substrate material may also comprise a Nb-base alloy that contains at least one secondary phase, such as a Nb-containing intermetallic compound comprising a silicide, carbide or boride. Such alloys are composites of a ductile phase (i.e., the Nb-base alloy) and a strengthening phase (i.e., a Nb-containing intermetallic compound). For other arrangements, the substrate material comprises a molybdenum based alloy, such as alloys based on molybdenum (solid solution) with Mo₅SiB₂ and Mo₃Si second phases. For other configurations, the substrate material comprises a ceramic matrix composite, such as a silicon carbide (SiC) matrix reinforced with SiC fibers. For other configurations the substrate material comprises a TiAl-based intermetallic compound.

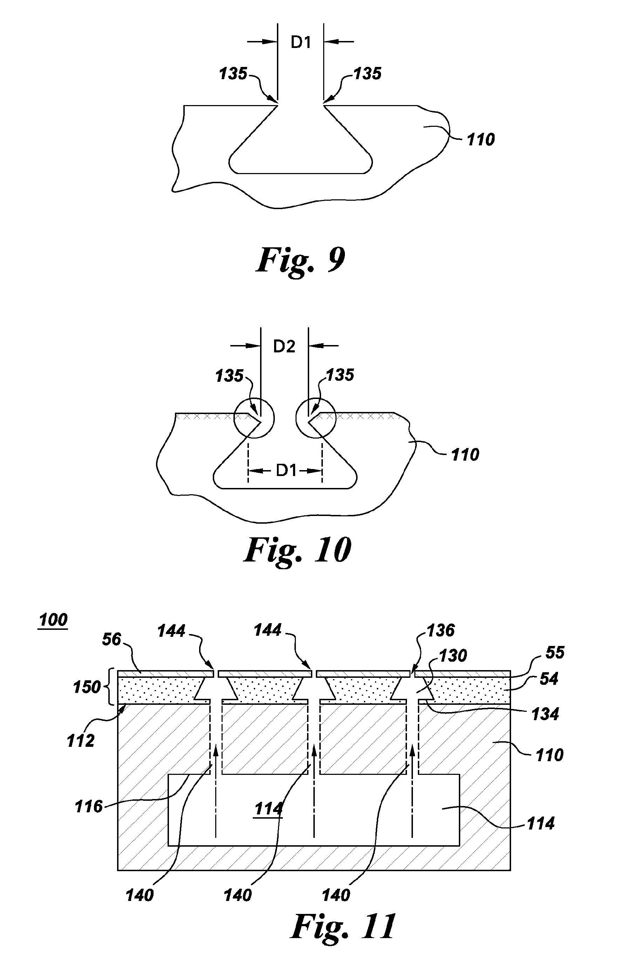

For the example process shown in FIGS. 9 and 10, the manufacturing method further includes processing an intermediate surface 112, 55 of the component 100 to plastically deform the surface adjacent at least one edge 135 of a respective groove 13. The resulting processed intermediate surface 112 is shown, for example, in FIG. 10, and the distance across the top 146 of the groove 132 is reduced as a result of the processing, as indicated in FIGS. 9-10. Beneficially, by reducing the distance across the top of the groove, the manufacturing method improves the ability of coatings to bridge the opening directly (that is, without the use of a sacrificial filler). By reducing one of the machining specifications, the manufacturing method may reduce the machining cost for the channels.

The grooves 132 may be formed using a variety of techniques. Example techniques for forming the groove(s) 132 include abrasive liquid jet, plunge electrochemical machining (ECM), electric discharge machining (EDM) with a spinning electrode (milling EDM), and laser machining. Example laser machining techniques are described in commonly assigned, US Patent Application Ser. No. 12/697,005, "Process and system for forming shaped air holes" filed January 29, 2010, which is incorporated by reference herein in its entirety. Example EDM techniques are described in commonly assigned US Patent Application Ser. No. 12/790,675, "Articles which include chevron film cooling holes, and related processes," filed May 28, 2010, which is incorporated by reference herein in its entirety.

For particular processes, the grooves are formed using an abrasive liquid jet 160 (FIG. 6). Example water jet drilling processes and systems are provided in commonly assigned US Patent Application Ser. No. 12/790,675, "Articles which include chevron film cooling holes, and related processes," filed May 28, 2010, which is incorporated by reference herein in its entirety. As explained in US Patent Application Ser. No. 12/790,675, the water jet process typically utilizes a high-velocity stream of abrasive particles (e.g., abrasive "grit"), suspended in a stream of high pressure water. The pressure of the water may vary considerably, but is often in the range of about 35-620 MPa. A number of abrasive materials can be used, such as garnet, aluminum oxide, silicon carbide, and glass beads. Beneficially, the capability of abrasive liquid jet machining techniques facilitates the removal of material in stages to varying depths, with control of the shaping. This allows the interior access holes 140 feeding the channel to be drilled either as a straight hole of constant cross section, a shaped hole (elliptical etc.), or a converging or diverging hole as shown.

In addition, and as explained in US Patent Application Ser. No. 12/790,675, the water jet system can include a multi-axis computer numerically controlled (CNC) unit 210 (FIG. 6). The CNC systems themselves are known in the art, and described, for example, in U.S. Patent Publication 1005/0013926 (S. Rutkowski et al), which is incorporated herein by reference. CNC systems allow movement of the cutting tool along a number of X, Y, and Z axes, as well as rotational axes.

Referring now to FIGS. 9 and 10, the intermediate surface 112, 55 of the component 100 may be processed using one or more of a variety of techniques, including without limitation, shot peening the intermediate surface 112, 55, water jet peening the intermediate surface 112, 55, flapper peening the intermediate surface 112, 55, gravity peening the intermediate surface 112, 55, ultrasonic peening the intermediate surface 112, 55, burnishing the intermediate surface 112, 55, low-plasticity burnishing the intermediate surface 112, 55, and laser shock peening the intermediate surface 112, 55, to deform the edge(s) 135 of the groove, such that the distance across the top 146 of the groove 132 is reduced.

For particular processes, the intermediate surface 112, 55 of the component 100 is processed by shot peening. In addition, shot peening typically introduces a number of surface irregularities in the intermediate surface 112, 55 of the component 100. Beneficially, the surface irregularities may aid in the bridging of coatings deposited over the surface, and especially coatings deposited using ion plasma deposition, electron beam physical vapor deposition, and sputtering.

For other processes, the intermediate surface 112, 55 of the component 100 is processed by burnishing the intermediate surface 112, 55. A variety of burnishing techniques may be employed, depending on the material being surface treated and on the desired deformation. Non-limiting examples of burnishing techniques include plastically massaging the intermediate surface of the component, for example using rollers, pins, or balls, and low plasticity burnishing.

The distance across the top of the groove will vary based on the specific application. However, for certain configurations, the distance across the top 146 of the groove 132 is in a range of about 8 - 25 mil (0.2 - 0.6 mm) prior to processing the intermediate surface 112, 55 of the component 100, and the distance across the top 146 of the groove 132 is in a range of about 0 - 15 mil (0-0.4 mm) after the intermediate surface 112, 55 has been processed.

For particular processes, the step of processing the intermediate surface 112, 55 of the component 100 also facets the intermediate surface 112, 55 in the vicinity of the groove 132. As used herein, "faceting" should be understood to tilt the intermediate surface in the vicinity of the groove inward, as indicated, for example, in the circled regions in FIG. 10.

The grooves 132 may be formed in the substrate 110 (FIGS. 2-8) or in an inner layer of a structural coating 54, as described below with reference to FIG. 11. For processes in which the grooves 132 are formed in the substrate 110, the intermediate surface 112, that is processed comprises the outer surface 112 of the substrate 110, as indicated for example in FIGS. 9 and 10. Namely, the outer surface 112 of the substrate 110 is processed to deform at least one edge 135 of the respective groove 132, as shown in FIG. 9 (before processing) and FIG. 10 (after processing).

As indicated, for example, in FIGS. 4, 5 and 11, the manufacturing method may further include disposing a coating 150 over at least a portion of the intermediate surface 112 (see FIGS. 4 and 5), 55 (see FIG. 11) of the component 110. The groove(s) 132 and the coating 150 define one or more channels 130 for cooling the component 100. Coating 150 comprises a suitable material and is bonded to the component.

For particular configurations, the coating 150 has a thickness in the range of 0.1-2.0 millimeters, and more particularly, in the range of 0.2 to 1 millimeter, and still more particularly 0.2 to 0.5 millimeters for industrial components. For aviation components, this range is typically 0.1 to 0.25 millimeters. However, other thicknesses may be utilized depending on the requirements for a particular component 100.

The coating 150 comprises structural coating layers and may further include optional additional coating layer(s). The coating layer(s) may be deposited using a variety of techniques. For particular processes, the structural coating layer(s) are deposited by performing an ion plasma deposition (cathodic arc). Example ion plasma deposition apparatus and method are provided in commonly assigned, US Published Patent Application No. 10080138529, Weaver et al, "Method and apparatus for cathodic arc ion plasma deposition," which is incorporated by reference herein in its entirety. Briefly, ion plasma deposition comprises placing a consumable cathode formed of a coating material into a vacuum environment within a vacuum chamber, providing a substrate 110 within the vacuum environment, supplying a current to the cathode to form a cathodic arc upon a cathode surface resulting in arc-induced erosion of coating material from the cathode surface, and depositing the coating material from the cathode upon the substrate surface 112.

Non-limiting examples of a coating deposited using ion plasma deposition include structural coatings, as well as bond coatings and oxidation-resistant coatings, as discussed in greater detail below with reference to US Patent No. 5,626,462, Jackson et al.,"Double-wall airfoil." For certain hot gas path components 100, the structural coating comprises a nickel-based or cobalt-based alloy, and more particularly comprises a superalloy or a (Ni,Co)CrAlY alloy. For example, where the substrate material is a Ni-base superalloy containing both γ and γ' phases, structural coating may comprise similar compositions of materials, as discussed in greater detail below with reference to US Patent No. 5,626,462.

For other process configurations, a structural coating is deposited by performing at least one of a thermal spray process and a cold spray process. For example, the thermal spray process may comprise combustion spraying or plasma spraying, the combustion spraying may comprise high velocity oxygen fuel spraying (HVOF) or high velocity air fuel spraying (HVAF), and the plasma spraying may comprise atmospheric (such as air or inert gas) plasma spray, or low pressure plasma spray (LPPS, which is also known as vacuum plasma spray or VPS). In one non-limiting example, a (Ni,Co)CrAlY coating is deposited by HVOF or HVAF. Other example techniques for depositing the structural coating include, without limitation, sputtering, electron beam physical vapor deposition, electroless plating, and electroplating.

For certain configurations, it is desirable to employ multiple deposition techniques for depositing structural and optional additional coating layers. For example, a first structural coating layer may be deposited using an ion plasma deposition, and a subsequently deposited layer and optional additional layers (not shown) may be deposited using other techniques, such as a combustion spray process or a plasma spray process. Depending on the materials used, the use of different deposition techniques for the coating layers may provide benefits in properties, such as, but not restricted to strain tolerance, strength, adhesion, and/or ductility.

For the particular process illustrated by FIG. 11, the coating 150 comprises an outer layer of a structural coating, and the manufacturing method further includes depositing an inner layer of the structural coating 54 on the outer surface 112 of the substrate 110 prior to forming the grooves 132. As indicated in FIG. 11, the grooves 132 are formed at least partially in the inner structural coating 54, such that the intermediate surface 55 that is processed comprises the upper surface 55 of the inner layer 54 of the structural coating. Namely, the upper surface 55 of the inner layer 54 of the structural coating is processed (similar to the process illustrated by FIGS. 9 and 10) to deform at least one edge 135 of the respective groove 132. It should be noted, that although the grooves shown in FIG. 11 do not extend into the substrate 110, for other configurations the grooves extend through the inner layer 54 of the structural coating and extend into the substrate 110. However, for many configurations, the grooves 132 are formed entirely in the substrate 110 (as discussed above with reference to FIGS. 9 and 10), and the coating layers are deposited after the grooves 132 have been formed.

Beneficially, the above-described manufacturing method reduces the top surface opening size of the grooves. As reduced channel opening size markedly enhances the ability of coatings to bridge the opening directly (without the use of a sacrificial filler), machining specifications may be relaxed, such that, for example, relatively large abrasive liquid jet nozzles may be employed, reducing machining time and cost.

Another manufacturing method is described with reference to FIGS. 2, 4, 5, and 7-11. As indicated, for example in FIGS. 2-4, the manufacturing method includes forming one or more grooves 132 in a component 100 that comprises a substrate 110 with an outer surface 112. Techniques for forming the grooves 132 are described above. As indicated in FIG. 2, the substrate 110 has at least one interior space 114. As indicated in FIGS. 4 and 5, each groove 132 extends at least partially along the substrate 110 and has a base 134 and a top 146. For the configuration shown in FIG. 4, each groove narrows at the respective top thereof, such that each groove 132 comprises a re-entrant shaped groove 132. As noted above, re-entrant-shaped grooves are discussed in commonly assigned, US Patent Application Ser. No. 12/943,624, Bunker et al., "Components with re-entrant shaped cooling channels and methods of manufacture."

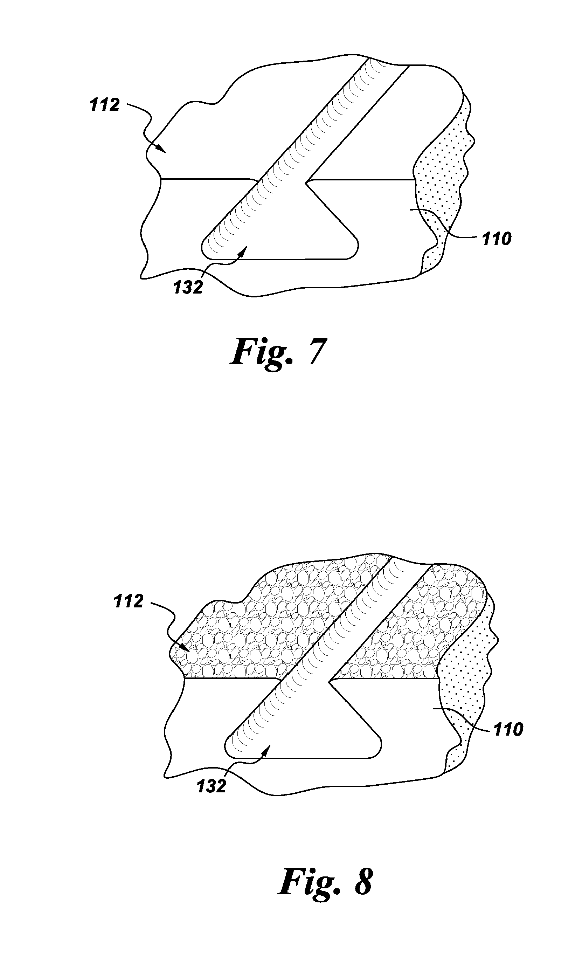

As indicated, for example in FIGS. 7-10, the manufacturing method further includes processing an intermediate surface 112, 55 of the component 100 to facet the intermediate surface 112, 55 in a vicinity of the groove 132. As noted above, "faceting" should be understood to tilt the intermediate surface inward in the vicinity of the groove, as indicated for example, in FIG. 10. Beneficially, tilting the intermediate surface inward in the vicinity of the groove improves the bridging of the coating over the groove opening (without the use of a sacrificial filler), such that the mechanical specifications for the groove opening may be relaxed, facilitating the use of a larger water jet nozzle to form the grooves. This would reduce the time needed to for the grooves as well as the associated machining cost.

The manufacturing method typically further includes casting the substrate 110 prior to forming the groove(s) 132. As noted above, suitable techniques for forming the groove(s) include, without limitation, abrasive liquid jet, plunge electrochemical machining (ECM), electric discharge machining (EDM) with a spinning electrode (milling EDM), and laser machining.

Returning now to FIGS. 7-10, suitable techniques for processing the intermediate surface 112, 55 of the component 100 include, without limitation, shot peening, water peening, flapper peening, gravity peening, ultrasonic peening, burnishing, and laser shock peening. More particularly, processing the intermediate surface 112, 55 plastically deforms the surface adjacent the edge(s) 135 of the groove, such that the distance across the top 146 of the groove 132 is reduced.

For particular processes, the intermediate surface 112, 55 of the component 100 is shot peened. As indicated, for example in FIG. 8, the shot peening introduces multiple surface irregularities in the intermediate surface 112, 55 of the component 100.

As noted above, the grooves 132 may be formed in the substrate 110 or in an inner layer of a structural coating 54 (FIG. 11). For processes in which the grooves 132 are formed in the substrate 110, the intermediate surface 112 that is processed comprises the outer surface 112 of the substrate 110, as indicated for example in FIGS. 9 and 10. Namely, the outer surface 112 of the substrate 110 is processed to facet the intermediate surface 112, 55 in a vicinity of the groove 132, as shown in FIG. 9 (before processing) and FIG. 10 (after processing). For the process illustrated by FIG. 11, the grooves 132 are formed at least partially in the inner structural coating 54, such that the intermediate surface 55 that is processed comprises the upper surface 55 of the inner layer 54 of the structural coating. Namely, for the process illustrated by FIG. 11, the upper surface 55 of the inner layer 54 of the structural coating is processed to facet the intermediate surface 55 in the vicinity of the groove 132.

A component 100 embodiment of the invention is described with reference to FIGS. 2-5, 10, and 11. As shown, for example, in FIGS. 2-5, the component 100 includes a substrate 110 comprising an outer surface 112 and an inner surface 116. As indicated in FIG. 2, the inner surface 116 defines at least one hollow, interior space 114. As indicated in FIGS. 4 and 5, for example, the component 100 defines one or more grooves 132. Each groove 132 extends at least partially along the substrate 110 and has a base 134 and a top 146. For the configuration shown in FIG. 4, each groove narrows at the respective top thereof, such that each groove 132 comprises a re-entrant shaped groove 132. As indicated, for example, in FIG. 10, an intermediate surface 112, 55 of the component 100 is faceted in the vicinity of the respective groove 132. As shown, for example, in FIGS. 3 and 11, one or more access holes 140 are formed through the base 134 of a respective groove 132, to connect the groove 132 in fluid communication with the respective hollow interior space 114. It should be noted that the access holes 140 are holes and are thus not coextensive with the channels 130, as indicated in FIG. 4, for example. As indicated in FIGS. 3 and 11, at least one coating 150 is disposed over at least a portion of the surface 112 of the substrate 110. The groove(s) 132 and the coating 150 together define one or more re-entrant shaped channels 130 for cooling the component 100. Beneficially, the bridging of the coating over faceted portions of the intermediate surface 112, 55 of the component 100 enhances bridging relative to an unfaceted surface.

For the example shown in FIG. 8, a number of surface irregularities are formed in the intermediate surface 112 of the component 100 in the vicinity of the respective groove 132. Beneficially, these surface irregularities have added surface area (relative to a smooth surface) which may enhance the adhesion to the coating.

Although only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A manufacturing method comprising:
   forming one or more grooves in a component that comprises a substrate with an outer surface, wherein the substrate has at least one interior space, and wherein each of the one or more grooves extends at least partially along the substrate and has a base and a top; and
   processing an intermediate surface of the component to plastically facet the intermediate surface in a vicinity of the groove.
2. The manufacturing method of Clause 1, wherein each of the respective one or more grooves narrows at the respective top thereof, such that each groove comprises a re-entrant shaped groove.
3. The manufacturing method of Clause 1 or 2, further comprising casting the substrate prior to forming the one or more grooves, wherein each groove is formed using one or more of an abrasive liquid jet, plunge electrochemical machining (ECM), electric discharge machining (EDM) with a spinning electrode (milling EDM), and laser machining.
4. The manufacturing method of Clauses 1, 2 or 3 wherein processing the intermediate surface of the component comprises performing one or more of shot peening the intermediate surface, water jet peening the intermediate surface, flapper peening the intermediate surface, gravity peening the intermediate surface, ultrasonic peening the intermediate surface, burnishing the intermediate surface, low plasticity burnishing the intermediate surface, and laser shock peening the intermediate surface, to plastically deform the surface adjacent at least one edge of the groove, such that the distance across the top of the groove is reduced.
5. The manufacturing method of Clause 4, wherein processing the intermediate surface of the component comprises shot peening the intermediate surface, and wherein the shot peening introduces a plurality of surface irregularities in the intermediate surface of the component.
6. The manufacturing method of any preceding Clause, further comprising disposing a coating over at least a portion of the intermediate surface of the component, wherein the groove(s) and the coating define one or more channels for cooling the component, wherein the coating comprises an outer layer of a structural coating, the method further comprising depositing an inner layer of the structural coating on the outer surface of the substrate prior to forming the one or more grooves, wherein the one or more grooves are formed at least partially in the inner structural coating, such that the intermediate surface that is processed to facet the intermediate surface in a vicinity of the groove comprises an upper surface of the inner layer of the structural coating.
7. The manufacturing method of any preceding Clause, wherein the one or more grooves are formed in the substrate, such that the intermediate surface that is processed to facet the intermediate surface in a vicinity of the groove comprises the outer surface of the substrate.

## Claims

1. A manufacturing method comprising:
forming one or more grooves (132) in a component (100) that comprises a substrate (110) with an outer surface (112), wherein the substrate (110) has at least one interior space (114), wherein each of the one or more grooves (132) extends at least partially along the substrate (110) and has a base (134) and a top (146); and
processing an intermediate surface (112, 55) of the component (100) to plastically deform the surface adjacent at least one edge (135) of a respective groove (132), such that the distance across the top (146) of the groove (132) is reduced.

2. The manufacturing method of Claim 1, wherein processing the intermediate surface (112, 55) of the component (100) comprises performing one or more of shot peening the intermediate surface (112, 55), water jet peening the intermediate surface (112, 55), flapper peening the intermediate surface (112, 55), gravity peening the intermediate surface (112, 55), ultrasonic peening the intermediate surface (112, 55), burnishing the intermediate surface (112, 55), low plasticity burnishing the intermediate surface, and laser shock peening the intermediate surface (112, 55), to plastically deform the surface adjacent the groove, such that the distance across the top (146) of the groove (132) is reduced.

3. The manufacturing method of Claim 2, wherein processing the intermediate surface (112, 55) of the component (100) comprises shot peening the intermediate surface (112, 55), and wherein the processing introduces a plurality of surface irregularities in the intermediate surface (112, 55) of the component (100).

4. The manufacturing method of any of Claims 1 to 3, wherein the distance across the top (146) of the groove (132) is in a range of about 0.2 - 0.6 mm prior to processing the intermediate surface (112, 55) of the component (100), and wherein the distance across the top (146) of the groove (132) is in a range of about 0 - 0.4 mm after the intermediate surface (112, 55) has been processed.

5. The manufacturing method of any of Claims 1 to 4, further comprising disposing a coating (150) over at least a portion of the intermediate surface (112, 55) of the component (110), wherein the groove(s) (132) and the coating (150) define one or more channels (130) for cooling the component (100), wherein the coating (150) comprises an outer layer of a structural coating, the method further comprising depositing an inner layer of the structural coating (54) on the outer surface (112) of the substrate (110) prior to forming the one or more grooves (132), wherein the one or more grooves (132) are formed at least partially in the inner structural coating (54), such that the intermediate surface (112, 55) that is processed to deform at least one edge (135) of the respective groove (132) comprises an upper surface (55) of the inner layer (54) of the structural coating.

6. The manufacturing method of any preceding Claim, wherein the one or more grooves (132) are formed in the substrate (110), such that the intermediate surface (112, 55) that is processed to plastically deform the surface adjacent the at least one edge (135) of the respective groove (132) comprises the outer surface (112) of the substrate (110).

7. The manufacturing method of any preceding Claim, wherein each of the respective one or more grooves (132) narrows at the respective top (146) thereof, such that each groove (132) comprises a re-entrant shaped groove (132).

8. The manufacturing method of any preceding Claim, further comprising casting the substrate prior to forming the one or more grooves, wherein each groove is formed using one or more of an abrasive liquid jet, plunge electrochemical machining (ECM), electric discharge machining (EDM) with a spinning electrode (milling EDM), and laser machining.

9. The manufacturing method of any preceding Claim, wherein the step of processing the intermediate surface of the component also facets the intermediate surface in a vicinity of the groove.

10. A component (100) comprising
a substrate (110) comprising an outer surface (112) and an inner surface (116), wherein the inner surface (116) defines at least one hollow, interior space (114), wherein the component (100) defines one or more grooves (132), wherein each groove (132) extends at least partially along the substrate (110) and has a base (134) and a top (146), wherein each of the respective one or more grooves (132) narrows at the respective top (146) thereof, such that each groove (132) comprises a re-entrant shaped groove (132), wherein an intermediate surface (112,55) of the component (100) is faceted in a vicinity of the respective groove (132), and wherein one or more access holes (140) are formed through the base (134) of a respective groove (132), to connect the groove (132) in fluid communication with the respective hollow interior space (114); and
at least one coating (150) disposed over at least a portion of the surface (112) of the substrate (110), wherein the one or more grooves (132) and the coating (150) together define one or more re-entrant shaped channels (130) for cooling the component (100).

11. The component of Claim 10, wherein a plurality of surface irregularities are formed in the intermediate surface (112,55) of the component (100) in the vicinity of the respective groove (132).

12. The component of Claim 10 or 11, wherein the coating (150) comprises an inner structural coating layer (54) disposed on the outer surface (112) of the substrate (110) and an outer structural coating layer disposed on the inner structural coating layer (54), wherein each groove (132) is formed at least partially in the inner structural coating layer (54), such that the intermediate surface (112,55), which is faceted in the vicinity of the respective groove (132), comprises an upper surface (55) of the inner layer (54) of the structural coating.

13. The component of any of Claims 10 to 12, wherein the one or more grooves (132) are formed in the substrate (110), such that the intermediate surface (112,55), which is faceted in the vicinity of the respective groove (132), comprises the outer surface (112) of the substrate (110).
